(19) Europäisches Patentamt / European Patent Office / Office européen des brevets

(11) **EP 4 779 934 A1**

(12) **EUROPEAN PATENT APPLICATION**
published in accordance with Art. 153(4) EPC

(43) Date of publication:
**22.07.2026 Bulletin 2026/30**

(21) Application number: **24870341.5**

(22) Date of filing: **02.09.2024**

(51) International Patent Classification (IPC):
*H04L 12/10* *(2006.01)*

(52) Cooperative Patent Classification (CPC):
H04L 12/10

(86) International application number:
**PCT/CN2024/116238**

(87) International publication number:
**WO 2025/066795 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311292731**

(71) Applicant: **HUAWEI TECHNOLOGIES CO., LTD.
Shenzhen 518129 (CN)**

(72) Inventors:
• **PAN, Dongcheng
Shenzhen, Guangdong 518129 (CN)**
• **LIN, Lifu
Shenzhen, Guangdong 518129 (CN)**
• **LI, Jiale
Shenzhen, Guangdong 518129 (CN)**
• **LIU, Lei
Shenzhen, Guangdong 518129 (CN)**
• **ZHONG, Qiwen
Shenzhen, Guangdong 518129 (CN)**
• **ZHANG, Tingting
Shenzhen, Guangdong 518129 (CN)**

(74) Representative: **Maiwald GmbH
Engineering
Elisenhof
Elisenstrasse 3
80335 München (DE)**

(54) **NETWORK DEVICE AND COMMUNICATION METHOD**

(57)     This application discloses a network device and a communication method. The network device includes an advanced physical layer APL port physical layer PHY and a hybrid interface circuit. The APL PHY is connected to a hybrid interface. The hybrid interface is configured to connect to an instrument device. The hybrid interface circuit is connected to the hybrid interface. The hybrid interface circuit is compatible with a power over data line PoDL mode, an analog input AI mode, and an analog output AO mode. In the PoDL mode, a power supply supplies power to the instrument device. In the AI mode, the power supply supplies power to the hybrid interface. In the AO mode, a voltage is converted into a current corresponding to a control signal of the instrument device. The technical solution can be compatible with an interface of a conventional instrument device based on APL communication.

FIG. 4

## Description

This application claims priority to Chinese Patent Application No. 202311292731.3, filed with the China National Intellectual Property Administration on September 28, 2023 and entitled "NETWORK DEVICE AND COMMUNICATION METHOD", which is incorporated herein by reference in its entirety.

## TECHNICAL FIELD

This application relates to the field of industrial communication technologies, and in particular, to a network device and a communication method.

## BACKGROUND

Currently, in industrial communication, low-speed communication protocols such as a highway addressable remote transducer (HART, Highway Addressable Remote Transducer) for a 4-20 mA analog signal and a digital signal, Profibus PA, and the Fieldbus Foundation (FF, Fieldbus Foundation) are mainly used. Rates of the low-speed communication protocols are usually approximately dozens of kps. According to an IEEE 802.3cg standard, a single pair Ethernet (SPE, Single pair Ethernet) can provide a communication rate of 10 Mbps over a twisted pair and use a power over data line (PoDL, Power over Data Line) to supply power to industrial field instrument devices during communication. After the IEEE 802.3cg standard is approved, an advanced physical layer (APL, Advanced Physical Layer) integrates standard solutions of the IEEE 802.3cg series into an Ethernet-APL technology to extend an Ethernet physical layer standard and formulate design specifications that meet field communication requirements of the process industry.

However, a current mainstream instrument device in the industry mainly uses a 4-20 mA signal. A PoDL pin of an APL switch is incompatible with an interface of a mainstream instrument. As a result, an interface of the APL switch cannot be directly connected to an interface of a conventional instrument device.

## SUMMARY

To resolve the foregoing technical problem, this application provides a network device and a communication method, to be compatible with an interface of a conventional instrument device based on APL communication.

According to a first aspect, an embodiment of this application provides a network device, including an advanced physical layer APL port physical layer PHY and a hybrid interface circuit. The APL PHY is connected to a hybrid interface. The hybrid interface is configured to connect to an instrument device. The hybrid interface circuit is connected to the hybrid interface. The hybrid interface circuit is compatible with a power over data line PoDL mode, an analog input AI mode, and an analog output AO mode. In the PoDL mode, a power supply supplies power to the instrument device. In the AI mode, the power supply supplies power to the hybrid interface. In the AO mode, a voltage is converted into a current corresponding to a control signal of the instrument device.

The hybrid interface circuit in the network device provided in this embodiment of this application is compatible with the power over data line PoDL mode, the analog input AI mode, and the analog output AO mode. In the AI mode, the power supply supplies power to the hybrid interface. In the AO mode, a value of an output current may be controlled, so that a current conversion circuit can output a current in a range of 4-20 mA in the AO mode. In the PoDL power supply mode, power can be supplied to the instrument device. Therefore, a switch integrates an APL communication function, a PoDL power supply function, and 4-20 mA AI and AO functions of the instrument device. In this way, an APL interface is compatible with an interface of a mainstream instrument device.

In a possible implementation, an interface of the instrument device is in the AI mode, and the network device controls the hybrid interface circuit to operate in the AO mode. In this way, the network device can control the instrument device. For example, the instrument device is a switch or a valve, and may execute a command sent by the network device to perform an action.

In a possible implementation, the network device further includes a controller, a current conversion circuit, and a detection circuit. Both the current conversion circuit and the detection circuit are connected to the controller. In the PoDL mode, the controller is configured to control the current conversion circuit to be turned off, and the power supply directly supplies power to a device end. In the AI mode, the controller is configured to: control the current conversion circuit to be turned off, and directly provide a direct current voltage to the hybrid interface. The detection circuit is configured to: detect a current of the hybrid interface and provide the current for the controller. In the AO mode, the controller is configured to control the current conversion circuit to convert the direct current voltage into a current corresponding to a control signal at the device end.

In a possible implementation, the controller is configured to control the current conversion circuit to output a direct current, where the direct current is less than a minimum value in a current range in the AI mode.

Because a valid current range of a 4-20 mA AI instrument interface is 4-20 mA, a probe signal has a current value that is of a direct current and that is set to be less than 4 mA. The current value is ignored by a 4-20 mA AI instrument, and does not cause an actuator at the device end to perform an incorrect action.

In a possible implementation, the controller is further configured to: control the current conversion circuit to output a current changing in a range in the PoDL mode; determine, by using a voltage range detected by the detection circuit, whether the interface of the instrument device is in the PoDL mode; and if the interface of the instrument device is in the PoDL mode, control the hybrid interface circuit to operate in the PoDL mode.

The hybrid interface circuit provided in this embodiment of this application may automatically identify whether the interface of the instrument device is in the PoDL mode, to automatically control the hybrid interface circuit to operate in the PoDL mode and supply power to the instrument device.

In a possible implementation, the controller is further configured to: control the current conversion circuit to output a current changing in a range in the AO mode; determine, by using a changing voltage detected by the detection circuit, whether the interface of the instrument device is in the AO mode; and if the interface of the instrument device is in the AO mode, control the hybrid interface circuit to operate in the AI mode.

The hybrid interface circuit provided in this embodiment of this application may automatically identify whether the interface of the instrument device is in the AO mode. If the interface of the instrument device is in the AO mode, the hybrid interface circuit is automatically controlled to operate in the AI mode and receive a signal sent by the instrument device.

In a possible implementation, the current conversion circuit includes a digital-to-analog converter and a voltage-to-current converter. An input end and an output end of the digital-to-analog converter are respectively connected to the controller and the voltage-to-current converter. The voltage-to-current converter is further configured to connect to a direct current/direct current DC/DC circuit. The controller is configured to send a voltage control digital signal to the digital-to-analog converter. The analog-to-digital converter is configured to convert the voltage control digital signal into a voltage control analog signal. The voltage-to-current converter is configured to convert, into a current based on the voltage control analog signal, a voltage output by the DC/DC circuit.

The current conversion circuit provided in this embodiment of this application may convert a digital signal into an analog signal through the digital-to-analog converter, and the voltage-to-current converter may convert a voltage signal into a current signal.

In a possible implementation, the detection circuit includes: a detection resistor, a current-to-voltage conversion circuit, and an analog-to-digital converter. A first end and a second end of the detection resistor are respectively connected to an output end of the current conversion circuit and the hybrid interface. The current-to-voltage conversion circuit is configured to: connect to the two ends of the detection resistor, and send voltages at the two ends of the detection resistor to the analog-to-digital converter. The analog-to-digital converter is configured to: convert, into a digital voltage, the voltage sent by the current-to-voltage conversion circuit, and send the digital voltage to the controller.

In the detection circuit provided in this embodiment of this application, a detection resistor with a small resistance value may be used to detect a current. However, because the resistance value is small, power consumption may be ignored. The current-to-voltage conversion circuit may convert a current into a voltage, and the analog-to-digital converter may convert an analog signal into a digital signal, so that the controller can perform direct processing.

In a possible implementation, the detection circuit further includes a voltage divider and a selection switch. A first end and a second end of the voltage divider are respectively connected to a first end of the detection resistor and the ground. A first input end and a second input end of the selection switch are respectively connected to an output end of the current-to-voltage conversion circuit and an output end of the voltage divider, and an output end of the selection switch is connected to an input end of the analog-to-digital converter. The controller is configured to: control, in the PoDL mode and the AI mode, the output end of the selection switch to be electrically connected to the first input end; and control, in the AO mode, the output end of the selection switch to be electrically connected to the second input end. The analog-to-digital converter is configured to: collect a current of the detection resistor for the controller when the output end of the selection switch is electrically connected to the first input end; and detect a voltage of the voltage divider for the controller when the output end of the selection switch is electrically connected to the second input end. The controller controls, by using the voltage detected by the analog-to-digital converter detection, a current output by the current conversion circuit.

The detection circuit in the hybrid interface circuit provided in this embodiment of this application can detect both a current and a voltage, and can implement switching between current detection and voltage detection through the selection switch.

In a possible implementation, the network device further includes an automatic range switching circuit. An input end and an output end of the automatic range switching circuit are respectively connected to the output end of the selection switch and the input end of the analog-to-digital converter; and the automatic range switching circuit includes at least an amplifier, configured to change a gain of the amplifier by using a voltage at the output end of the selection switch.

To expand a range of a detection signal, the hybrid interface circuit provided in this embodiment of this application further includes the automatic range switching circuit, and a range may be automatically switched based on a value of a signal. For example, if a current exceeds a preset current, the automatic range switching circuit may further automatically switch the range, to implement monitoring of a large current. If a monitored current exceeds a maximum power supply current negotiated in the PoDL, the controller disconnects a path switch and stops power supply to prevent power used for supplying power from exceeding a limit.

In a possible implementation, the automatic range switching circuit includes: a hysteresis comparator, the amplifier, a first resistor, a second resistor, and a third resistor. A first input end and a second input end of the hysteresis comparator are respectively connected to the output end of the selection switch and a reference voltage, a first input end of the amplifier is connected to the output end of the selection switch, a second input end of the amplifier is connected to a first end of the first resistor, a second end of the first resistor is connected to an output end of the amplifier through the second resistor, an output end of the hysteresis comparator is connected to a control end of a controllable switching transistor, a first end and a second end of the controllable switching transistor are respectively connected to a first end of the third resistor and the ground, and a second end of the third resistor is connected to the second end of the first resistor.

A specific implementation form of the automatic range switching circuit, for example, a variable gain amplifier controlled by a program of the controller, or an adjustable gain analog front-end circuit integrated into the ADC, or a circuit built for an analog component, is not specifically limited in this embodiment of this application. A range is not specifically limited in this embodiment of this application. For example, automatic switching of the range from several mA, dozens of mA, and hundreds of mA may be met.

In a possible implementation, the network device further includes a path switch. A first end and a second end of the path switch are respectively connected to an output end of a direct current/direct current DC/DC circuit and the first end of the detection resistor; and a control end of the path switch is connected to the controller. The controller is further configured to: control, in the PoDL mode or the AI mode, the path switch to be turned on, and control, in the AO mode, the path switch to be turned off.

The path switch can implement switching between the DC/DC circuit providing a voltage for a cable and the DC/DC circuit providing a current for a cable.

In a possible implementation, the network device further includes: a calibration switch and a reference current source. The reference current source and the calibration switch are connected in series and then connected between a second end of the detection resistor and the ground, and a control end of the calibration switch is connected to the controller. The controller is further configured to control, when the current of the detection resistor is greater than a preset current, the calibration switch to be turned on.

An APL switch provided in this embodiment of this application further has an automatic calibration function, to avoid a change in a resistance value of the detection resistor when a detection current is excessively large, which causes an offset of a detection current result. That is, the automatic calibration function is to implement more accurate detection. An example of current detection is used. Because the resistance value of the detection resistor Rsense is generally small, for example, only several ohms, when a large current flows through the detection resistor Rsense, the resistance value is easily affected by a thermal effect, causing a change in the resistance value, and causing an offset of the detection current and inaccurate detection.

In a possible implementation, the network device further includes a coupling/decoupling network. The APL PHY is connected to the hybrid interface through a differential capacitor in the coupling/decoupling network. The hybrid interface circuit is connected to the hybrid interface through a filter inductor in the coupling/decoupling network.

In a possible implementation, current signal ranges in the AI mode and the AO mode are 4-20 mA.

In a possible implementation, the controller is further configured to: if the AI mode is not met, control the current conversion circuit to output a constant current in the range in the PoDL mode; and determine, by using a voltage detected by the detection circuit, whether the interface of the instrument device is in a PoDL probe mode.

According to a second aspect, an embodiment of this application further provides a communication method of a network device. The network device includes an APL port physical layer PHY and a hybrid interface circuit. The APL PHY is connected to the hybrid interface. The hybrid interface circuit is compatible with a power over data line PoDL mode, an analog input AI mode, and an analog output AO mode. The hybrid interface is configured to connect to an instrument device. The hybrid interface circuit is connected to the hybrid interface; and the hybrid interface circuit includes a current conversion circuit and a detection circuit. The method includes: controlling the current conversion circuit to output a probe current; determining, by using a voltage detected by the detection circuit, whether an interface of the instrument device is in the AI mode; and if the interface of the instrument device is in the AI mode, controlling a hybrid interface circuit to operate in the AO mode, where the probe current is a sinusoidal alternating current or a direct current less than a minimum value in a current range in the AI mode; if the interface of the instrument device is not in the AI mode, controlling the current conversion circuit to output a current changing in a range in the PoDL mode; determining, by using a voltage range detected by the detection circuit, whether the interface of the instrument device is in the PoDL mode; and if the interface of the instrument device is in the PoDL mode, controlling the hybrid interface circuit to operate in the PoDL mode; and if the interface of the instrument device is not in the PoDL mode, controlling the current conversion circuit to output a current changing in a range in the AO mode; determining, by using a changing voltage detected by the detection circuit, whether the interface of the instrument device is in the AO mode; and if the interface of the instrument device is in the AO mode, controlling the hybrid interface circuit to operate in the AI mode.

According to the communication method provided in this embodiment of this application, the power over data line PoDL mode, the analog input AI mode, and the analog output AO mode are compatible, an interface type of the instrument device can be automatically identified, and the interface type of the instrument device can be automatically adapted to, to control the instrument device or receive a signal from the instrument device.

## BRIEF DESCRIPTION OF DRAWINGS

FIG. 1 is an operating diagram of a conventional APL switch;
FIG. 2 is an operating diagram of an APL switch according to an embodiment of this application;
FIG. 3 is a diagram of interfaces of an APL switch according to an embodiment of this application;
FIG. 4 is an internal architectural diagram of an APL switch according to an embodiment of this application;
FIG. 5 is an internal architectural diagram of another APL switch according to an embodiment of this application;
FIG. 6 is an internal architectural diagram of still another APL switch according to an embodiment of this application;
FIG. 7 is an internal architectural diagram of yet another APL switch according to an embodiment of this application;
FIG. 8 is an internal architectural diagram of still yet another APL switch according to an embodiment of this application;
FIG. 9 is a diagram of a coupling/decoupling network according to an embodiment of this application;
FIG. 10 is a diagram of another coupling/decoupling network according to an embodiment of this application;
FIG. 11 is a flowchart of performing self-adaptive detection by a hybrid interface module according to an embodiment of this application;
FIG. 12 is an architectural diagram of an internal filter of an instrument device according to an embodiment of this application;
FIG. 13 is a diagram of another probe interface type according to an embodiment of this application; and
FIG. 14 is a flowchart of a communication method of an APL switch according to an embodiment of this application.

## DESCRIPTION OF EMBODIMENTS

To cause a person skilled in the art to better understand technical solutions provided in embodiments of this application, the following first describes an application scenario.

An APL switch is used in the process industry to cause all field networks of the process industry to access an Ethernet. A type of an instrument device or a transducer connected to the APL switch is not specifically limited in embodiments of this application. For example, an instrument may detect various physical quantities, such as a temperature, pressure, a liquid level, or a flow rate. In addition, the APL switch may also output a signal to the instrument device, for example, control the instrument device. The control may be switch or valve control. A PoDL mode of the APL switch includes a probe mode, a power supply mode, and a sleep mode. In the probe mode, the APL switch outputs a current in a range of 9-16 mA to the instrument device, and if a detected feedback voltage is within a preset range, the power supply mode is entered. In the power supply mode, the APL switch provides a voltage for the instrument device. In the sleep mode, when a current in a detection cable is less than a preset current threshold, the sleep mode is entered.

However, a current APL switch is not compatible with a conventional data interface. For example, for instrument devices in the petrochemical industry and other industries, a 4-20 mA signal is mainly transmitted by a mainstream instrument. A connection manner of a ground pin in the mainstream instrument is different from that of a ground pin in a PoDL of the APL switch. As a result, a PoDL interface of the APL switch does not match a 4-20 mA interface of the instrument device.

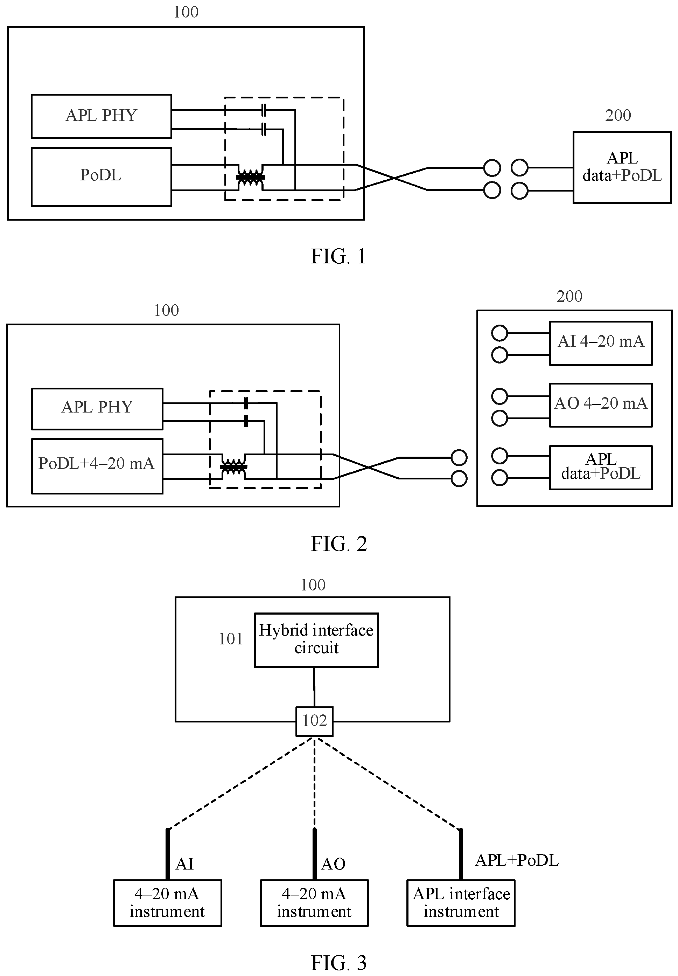

FIG. 1 is a diagram of an operating scenario of a conventional APL switch.

An interface in the conventional APL switch 100 includes only an APL PHY and a PoDL, and can implement APL data transmission or PoDL power supply, that is, an instrument device 200 includes an APL data transmission requirement and a PoDL power supply requirement.

However, because a power supply pin of the PoDL is incompatible with a 4-20 mA pin, an output pin of the PoDL includes a power supply pin and a GND pin, where the power supply pin provides a power voltage output for the instrument device. The 4-20 mA pin includes power supply pins V+ and V-. V- is connected to the GND through a 250-ohm resistor. Therefore, the two types of interface pins are directly compatible with each other and are connected to the 250-ohm resistor in series. As a result, most power used for supplying power is consumed by the resistor when the PoDL supplies power.

To resolve the foregoing technical problem, embodiments of this application provide a network device. The network device may be a switch or a gateway device, the gateway device may be an internet of things gateway, and the switch may be, for example, an APL switch. For ease of understanding, the following embodiments are described by using an example in which the network device is the APL switch. The network device includes a hybrid interface circuit. The hybrid interface circuit is compatible with a PoDL power supply function and 4-20 mA analog input (AI, Analog Input) and analog output (AO, Analog Output) functions. An AO function of a 4-20 mA signal interface is to output a signal, that is, output a control signal to an instrument, and the AI function is to input a signal, that is, receive a detection signal received from the instrument. The AI and the AO do not affect each other, so that independent operation can be implemented in each functional mode, and the functional mode can be applied to field data communication and power supply in the process industry. In this way, a requirement of future Ethernet access can be met, and mainstream 4-20 mA data transmission is compatible.

FIG. 2 is a diagram of an operating scenario of an APL switch according to an embodiment of this application.

The APL switch 100 provided in this embodiment of this application includes an APL PHY and a hybrid interface circuit. The hybrid interface circuit is compatible with a PoDL power supply function and a 4-20 mA data transmission function. The APL switch 100 can implement an APL data transmission function, a PoDL power supply function, and 4-20 mA AI and AO functions with a corresponding instrument device 200. In some embodiments, only one of the AI function, the AO function, and the PoDL function can be implemented at a time. A host computer may trigger the APL switch 100 to select one of the functions, or manually trigger one of the functions, or automatically trigger and select one of the functions. This is not specifically limited in this embodiment of this application.

For ease of understanding, FIG. 3 is a diagram of interfaces of an APL switch 100 according to an embodiment of this application.

The APL switch 100 provided in this embodiment of this application includes a hybrid interface circuit 101 and a hybrid interface 102. The hybrid interface circuit 101 is connected to the hybrid interface 102. The hybrid interface 102 may be connected to a 4-20 mA AI function instrument of an instrument device, or a 4-20 mA AO function instrument of the instrument device, or an APL interface instrument of the instrument device. APL data transmission and PoDL power supply can be implemented between the APL interface instrument and the APL switch 100.

To make the foregoing objectives, features, and advantages of this application clearer and more comprehensible, the following describes embodiments of this application in more detail with reference to the accompanying drawings and specific implementations.

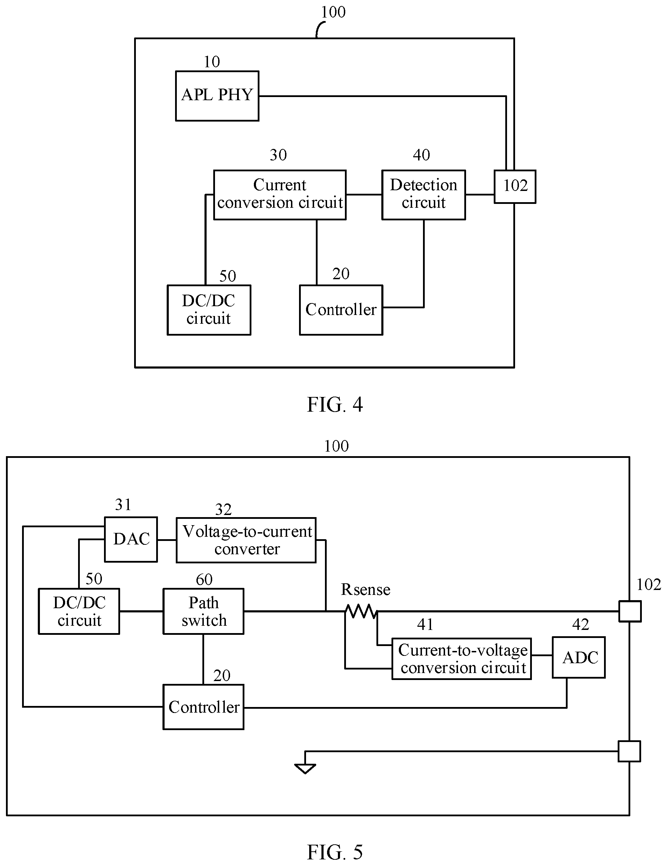

FIG. 4 is an internal architectural diagram of an APL switch 100 according to an embodiment of this application.

An Ethernet physical layer APL switch 100 provided in this embodiment of this application includes an APL port physical layer PHY 10 and a hybrid interface circuit.

The APL PHY 10 is connected to a hybrid interface 102. The hybrid interface 102 is configured to connect to an instrument device. The hybrid interface circuit is connected to the hybrid interface 102.

The hybrid interface circuit 102 is compatible with a power over data line PoDL mode, an analog input AI mode, and an analog output AO mode.

In the PoDL mode, a power supply supplies power to the instrument device.

In the AI mode, the power supply supplies power to the hybrid interface 102.

In the AO mode, a voltage is converted into a current corresponding to a control signal of the instrument device.

In a possible implementation, as shown in FIG. 4, the hybrid interface circuit includes a controller 20, a current conversion circuit 30, and a detection circuit 40. Both the current conversion circuit 30 and the detection circuit 40 are connected to the controller 20.

The controller 20 in the hybrid interface circuit provided in this embodiment of this application may control the hybrid interface circuit to operate in one of the following three modes: the PoDL mode, a 4-20 mA AI mode, and a 4-20 mA AO mode.

In the PoDL power supply mode, the controller 20 is configured to control the current conversion circuit 30 to convert a direct current voltage into a current in the PoDL mode, and provide the current for the instrument device to supply power. A power supply current in the PoDL mode is 9-16 mA. A source of the direct current voltage is not specifically limited in this embodiment of this application. For example, the direct current voltage may be provided by a direct current/direct current (Direct Circuit/ Direct Circuit, DC/DC) circuit 50 included in the APL switch 100. The current conversion circuit 30 may convert, into a current for output, a voltage provided by the DC/DC circuit 50. The current conversion circuit 30 may be implemented by using a voltage-to-current circuit, or may be implemented by using a voltage-to-current chip. In another possible implementation, a control signal sent by the controller 20 is a digital signal, and the current conversion circuit 30 further has a digital-to-analog conversion function, that is, converts, into an analog signal, the control signal sent by the controller 20. In another embodiment, the control signal sent by the controller 20 is an analog signal.

A specific implementation form of the controller 20 is not specifically limited in this embodiment of this application. For example, the controller 20 may be implemented by a micro control unit (micro control unit, MCU). The controller 20 may send the control signal to the current conversion circuit 30, where the control signal indicates a value of a current output by the current conversion circuit, and the current conversion circuit 30 may change the output current based on the control signal sent by the controller 20.

In the AI mode, the APL switch receives a signal from the instrument device. In this case, the controller 20 is configured to control a bypass of the current conversion circuit 30, for example, control the current conversion circuit 30 to be turned off, that is, the current conversion circuit 30 does not output a current. The DC/DC circuit 50 provides the direct current voltage for the hybrid interface 102 without passing through the current conversion circuit 30, that is, the DC/DC circuit 50 provides an operating voltage for a cable through a detection resistor in a detection circuit 40. In a possible implementation, the current conversion circuit 30 is bypassed. The detection circuit 40 is configured to: detect a current of the hybrid interface 102 and provide the current for the controller 20. The detection circuit 40 of the instrument device may convert a current signal into a voltage signal for detection, and send a detection result to the controller 20, to implement a 4-20 mA AI function.

In the AO mode, the APL switch 100 needs to output a current of 4-20 mA to the instrument device, to implement instrument control of the instrument device. The control may include controlling a connection/disconnection of a switch of the instrument device or opening and closing of a valve. In this case, the controller 20 is configured to control the current conversion circuit 30 to convert the direct current voltage into a current corresponding to the control signal. For example, a current range corresponding to the control signal of the instrument device is 4-20 mA. In this case, the detection circuit 40 may be in a voltage detection mode, detect a voltage in a cable in real time, and send the voltage to the controller 20. The controller 20 controls a value of an output current of the current conversion circuit 30 based on a detection result of the detection circuit 40, to prevent overvoltage caused by the voltage in the circuit exceeding a limit.

For the APL switch provided in this embodiment of this application, a manner of selecting an operating mode is not specifically limited. The operating mode may be automatically selected, or may be externally triggered.

The hybrid interface circuit in the APL switch provided in this embodiment of this application includes the controller, the current conversion circuit, and the detection circuit. In the AO mode, the controller may control the value of the current output by the current conversion circuit, so that the current conversion circuit can output a current in a range of 4-20 mA in the AO mode. The detection circuit can implement signal detection in a 4-20 mA AI mode, and in the PoDL power supply mode, the APL switch can supply power to the instrument device. Therefore, the switch integrates an APL communication function, a PoDL power supply function, and 4-20 mA AI and AO functions of the instrument device. In this way, an APL interface is compatible with an interface of a mainstream instrument.

FIG. 5 is an internal architectural diagram of another APL switch according to an embodiment of this application.

According to the APL switch provided in this embodiment of this application, a current conversion circuit includes a digital-to-analog converter (Digital-to-Analog Converter, DAC) 31 and a voltage-to-current converter 32.

An input end and an output end of the DAC 31 are respectively connected to a controller 20 and the voltage-to-current converter 32.

The voltage-to-current converter 32 is further configured to connect to a DC/DC circuit 50.

The controller 20 is configured to send a voltage control digital signal to the DAC 31.

The DAC 31 is configured to convert the voltage control digital signal into a voltage control analog signal.

The voltage-to-current converter 32 is configured to convert, into a current based on the voltage control analog signal, a voltage output by the DC/DC circuit 50.

A detection circuit 40 includes: a detection resistor Rsense, a current-to-voltage conversion circuit 41, and an analog-to-digital converter (Analog-to-Digital Converter, ADC) 42. A resistance value of Rsense is generally small, and is only several ohms. Therefore, a loss of Rsense may be ignored.

A first end and a second end of the detection resistor Rsense are respectively connected to an output end of the current conversion circuit and a hybrid interface 102. Specifically, the first end of Rsense is connected to an output end of the voltage-to-current converter 32, that is, an output current of the voltage-to-current converter 32 passes through the detection resistor Rsense.

The current-to-voltage conversion circuit 41 is configured to: connect to the two ends of the resistor Rsense, detect voltages at the two ends of the resistor Rsense, and send detected voltage values to the ADC 42. A function of the current-to-voltage conversion circuit 41 is to convert, into a voltage on Rsense, a detected current flowing through Rsense. The current-to-voltage conversion circuit 41 may be implemented by using a built circuit, or may be implemented by using a chip. This is not specifically limited in this embodiment of this application.

The ADC 42 is configured to: convert, into a digital voltage, an analog voltage sent by the current-to-voltage conversion circuit 41, and send the digital voltage to the controller 20. Because the controller 20 can process only the digital signal, the ADC 42 needs to convert an analog signal into a digital signal.

It can be learned from the detection circuit shown in FIG. 5 that the APL switch provided in this embodiment of this application can implement current detection in a cable, and in particular, when operating in an AI mode, detect a current signal sent by an instrument device. When the APL switch operates in an AO mode, the ADC 42 may also detect a current in the cable and send the current to the controller 20 to form a closed-loop feedback, and the controller 20 may adjust a control signal output to the DAC 31 to adjust a value of the current in the cable.

In addition, the APL switch provided in this embodiment of this application further includes a path switch 60.

A first end and a second end of the path switch 60 are respectively connected to an output end of the DC/DC circuit 50 and the first end of the detection resistor Rsense.

The controller 20 is further configured to: control, in a PoDL mode or the AI mode, the path switch 60 to be electrically turned on, and control, in the AO mode, the path switch 60 to be turned off.

A specific type of the path switch 60 is not specifically limited in this embodiment of this application. For example, the path switch 60 may be a controllable switching transistor, for example, may be implemented by using a metal-oxide-semiconductor (metal-oxide-semiconductor, MOS) transistor or a diode. The path switch 60 may receive the control signal sent by the controller 20, to cause a circuit between the DC/DC circuit and Rsense to be connected or disconnected. The controller 20 controls, by controlling the path switch 60, the DC/DC circuit 50 to provide a voltage or a current for the cable.

When the path switch 60 is turned on, the DC/DC circuit 50 is electrically connected to the first end of Rsense. This is equivalent to a case in which the turned-on path switch 60 bypasses the voltage-to-current converter (V/I) 32, that is, V/I 32 does not output a current to the first end of Rsense, and the DC/DC circuit 50 provides a voltage for the cable through Rsense.

When the path switch 60 is turned off, the DC/DC circuit 50 is electrically connected to the first end of Rsense through the DAC 31 and V/I 32, and V/I 32 converts, into a current, the voltage provided by the DC/DC circuit 50 and provides the current for the first end of Rsense. The detection circuit provided in this embodiment of this application can detect both a current in the cable and a voltage in the cable. The following provides detailed descriptions with reference to the accompanying drawings.

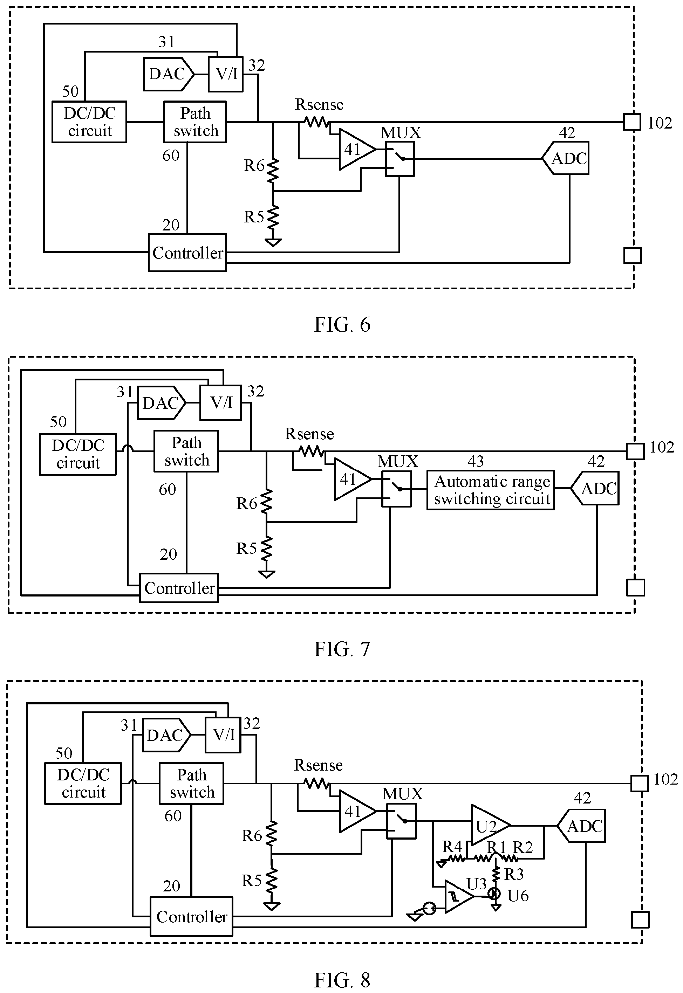

FIG. 6 is an internal architectural diagram of still another APL switch according to an embodiment of this application.

In the APL switch provided in this embodiment of this application, a detection circuit further includes a voltage divider and a selection switch MUX.

The selection switch MUX is controlled by a controller 20, and a function of the selection switch MUX is to implement switching of an ADC 42 between current sampling and voltage sampling. The voltage divider divides a voltage in a cable, to cause a detected voltage to meet a range of the ADC 42.

The voltage divider includes a fifth resistor R5 and a sixth resistor R6. A first end of the sixth resistor R6 is connected to a first end of Rsense, and a second end of the sixth resistor R6 is grounded through the fifth resistor R5. The first end of the sixth resistor R6 is a first end of the voltage divider, a second end of the fifth resistor R5 is a second end of the voltage divider, and the second end of the sixth resistor R6 is an output end of the voltage divider, that is, a divided voltage is output.

The first end and the second end of the voltage divider are respectively connected to the first end of the detection resistor Rsense and the ground.

The selection switch MUX may be implemented by using a multiplexer switch or a selector. In this embodiment of this application, a multiplexer switch or a selector with a quantity of input ends being greater than or equal to 2 may be selected.

A first input end and a second input end of the selection switch MUX are respectively connected to an output end of a current-to-voltage conversion circuit 41 and the output end of the voltage divider, that is, the second end of R6, and an output end of the selection switch MUX is connected to an input end of the ADC 42. In a possible implementation, the current-to-voltage conversion circuit 41 may be implemented by using an amplifier.

The controller 20 is configured to: control, in a PoDL mode and an AI mode, the output end of the selection switch MUX to be electrically connected to the first input end, that is, to detect a current of Rsense; and control, in an AO mode, the output end of the selection switch MUX to be electrically connected to the second input end, that is, to detect a voltage in the cable.

The ADC 42 is configured to: collect, when the output end of the selection switch MUX is electrically connected to the first input end, the current of the detection resistor Rsense, and send the current to the controller; and detect, when the output end of the selection switch MUX is electrically connected to the second input end, a voltage of the voltage divider, and send the voltage to the controller.

The controller 20 controls, by using the voltage detected by the ADC 42, a current output by V/I 32.

In addition, the APL switch provided in this embodiment of this application can further implement automatic range switching of current or voltage detection. The following provides detailed descriptions with reference to the accompanying drawings.

FIG. 7 is an internal architectural diagram of yet another APL switch according to an embodiment of this application.

The APL switch provided in this embodiment of this application includes an automatic range switching circuit 43.

An input end and an output end of the automatic range switching circuit 43 are respectively connected to an output end of a selection switch MUX and an input end of an ADC 42;

The automatic range switching circuit 43 includes at least an amplifier, configured to change a gain of the amplifier by using a voltage at the output end of the selection switch MUX, to implement automatic range switching of a sampled voltage or current.

A specific implementation form of the automatic range switching circuit 43, for example, a variable gain amplifier controlled by a controller 20, or an adjustable gain analog front-end circuit integrated into the ADC 42, or a circuit built for an analog component is not specifically limited in this embodiment of this application. A range is not specifically limited in this embodiment of this application. For example, automatic switching of the range from several mA, dozens of mA, and hundreds of mA may be met.

The following describes three modes in which the APL switch provided in this embodiment of this application operates in a PoDL: a probe mode, a power supply mode, and a sleep mode.

In the PoDL probe mode, the controller 20 performs detection in a PoDL mode. The controller 20 controls a path switch 60 to be disconnected, and sends a voltage control digital signal to a DAC 31. The DAC 31 converts the voltage control digital signal into a voltage control analog signal. V/I 32 converts, into a current based on the voltage control analog signal, a voltage output by a DC/DC circuit 50, specifically outputs a current in a range of 9-16 mA, and changes a current value in this range. In this case, the selection switch MUX is connected to a voltage divider, that is, connected to a common end of R5 and R6. The ADC 42 detects a feedback voltage and sends the feedback voltage to the controller 20, and the controller 20 determines whether the feedback voltage is from 4.05 V to 4.7 V. If a feedback voltage of an instrument device is within this range, the PoDL power supply mode for an instrument device (according to a standard procedure specified for the PoDL) is entered. If interaction is successful, the power supply mode is entered.

In the PoDL power supply mode, the controller 20 turns on a path switch, and the DC/DC circuit 50 supplies power to the instrument device. In this case, an operating current in the power supply mode needs to be limited and monitored. In this case, the detection circuit is in a current detection mode. Specifically, the controller 20 sets the detection circuit to be in the current detection mode, and the MUX is connected to a current-to-voltage conversion circuit 41. The ADC 42 monitors a value of a power supply current in real time, and if the current exceeds a first preset current value, the automatic range switching circuit 43 automatically switches a range, to implement monitoring of a large current. If a monitored current exceeds a maximum power supply current negotiated in the PoDL, the controller disconnects the path switch and stops power supply to prevent power used for supplying power from exceeding a limit.

In the PoDL sleep mode, the controller 20 monitors a small current (from 1.25 mA to 1.85 mA) in a cable, the controller 20 controls the path switch 60 to be turned on, and the DC/DC circuit 50 first provides a voltage for the cable through the path switch 60. In this case, the controller 20 controls the MUX to be electrically connected to the current-to-voltage conversion circuit 41, and the detection circuit is in the current detection mode, that is, the ADC 42 detects a current of Rsense and sends the current to the controller 20. The controller 20 determines that the current is lower than a second preset current value, and the automatic range switching circuit 43 may further automatically switch a range, to implement monitoring of a small current.

To help a person skilled in the art understand the automatic range switching circuit provided in embodiments of this application, the following describes a specific implementation of the automatic range switching circuit with reference to the accompanying drawings.

FIG. 8 is an internal architectural diagram of still yet another APL switch according to an embodiment of this application.

According to the APL switch provided in this embodiment of this application, an automatic range switching circuit includes: a hysteresis comparator U3, an amplifier U2, a first resistor R1, a second resistor R2, a third resistor R3, and a fourth resistor R4.

A first input end and a second input end of the hysteresis comparator U3 are respectively connected to an output end of a selection switch MUX and a reference voltage. A first input end of the amplifier U2 is connected to the output end of the selection switch MUX, a second input end of the amplifier U2 is connected to a first end of the first resistor R1, a second end of the first resistor R1 is connected to an output end of the amplifier U2 through the second resistor R2, and an output end of the hysteresis comparator U3 is connected to a control end of a controllable switching transistor U6. A first end and a second end of the controllable switching transistor U6 are respectively connected to a first end the third resistor R3 and the ground, and a second end of the third resistor R3 is connected to the second end of the first resistor R1. The second input end of the amplifier U2 is grounded through the fourth resistor R4.

In this embodiment of this application, an example in which the controllable switching transistor U6 is a MOS transistor is used for description. Alternatively, an example in which the controllable switching transistor U6 is another controllable semiconductor device may be used for implementation.

The reference voltage may be provided by using a voltage source. For example, as shown in FIG. 8, a second input end of the hysteresis comparator U3 is grounded by using the voltage source.

A function of the automatic range switching circuit provided in FIG. 8 is to adapt to a large voltage or current detection range. An operating principle is as follows: When a voltage output by the selection switch MUX exceeds a hysteresis voltage of the hysteresis comparator U3, the hysteresis comparator U3 outputs a drive signal to drive the MOS transistor U6 to be turned on, so that the third resistor R3 is connected to a circuit, to change a feedback coefficient of the amplifier U2, and adjust a gain of the amplifier U2.

In a possible implementation, the APL switch provided in this embodiment of this application further has an automatic calibration function, to avoid a change in a resistance value of a detection resistor when a detection current is excessively large, which causes an offset of a detection current result. That is, the automatic calibration function is to implement more accurate detection. An example of current detection is used. Because the resistance value of the detection resistor Rsense is generally small, for example, only several ohms, when a large current flows through the detection resistor Rsense, the resistance value is easily affected by a thermal effect, causing a change in the resistance value, and causing an offset of the detection current and inaccurate detection.

Still refer to FIG. 8. The APL switch provided in this embodiment of this application further includes a calibration switch and a reference current source U5.

The reference current source U5 and the calibration switch are connected in series and then connected between a second end of the detection resistor Rsense and the ground. A control end of the calibration switch is connected to a controller 20.

The controller 20 is further configured to control, when a current of the detection resistor Rsense is greater than a preset current, the calibration switch to be turned on. Because the reference current source U5 is a bypass current source, and is not affected by a power current, the thermal effect caused by a large current can be avoided. The reference current source U5 is connected only during calibration, and when calibration is not needed, the controller 20 controls the calibration switch to be disconnected.

The following describes a calculation method of a calibration coefficient K with reference to formulas.

$$I = K * U_{ADC1}$$

$$I + \Delta I = K * U_{ADC2}$$

$$K = \Delta I / (U_{ADC2} - U_{ADC1})$$

I is a current flowing through Rsense when the reference current source U5 is not connected.

$U_{ADC1}$ is a voltage sampled by an ADC when the reference current source U5 is not connected.

$\Delta I$ is a reference current output by the reference current source U5.

$U_{ADC2}$ is a current flowing through Rsense when the reference current source U5 is connected.

In a specific implementation, the APL switch provided in this embodiment of this application further includes a coupling/decoupling network.

An APL PHY is connected to a hybrid interface through differential capacitors C1 and C2 in the coupling/decoupling network.

The hybrid interface circuit is connected to the hybrid interface through a filter inductor L in the coupling/decoupling network.

The two capacitors C1 and C2 form a differential channel to isolate a direct current signal from a low-frequency signal, form a high-speed signal path with the APL PHY, and provide receiving and sending of APL data. The inductor L is configured to: filter high-speed APL data, provide a low-speed signal path, and connect to a low-speed PoDL and 4-20 mA hybrid interface circuit.

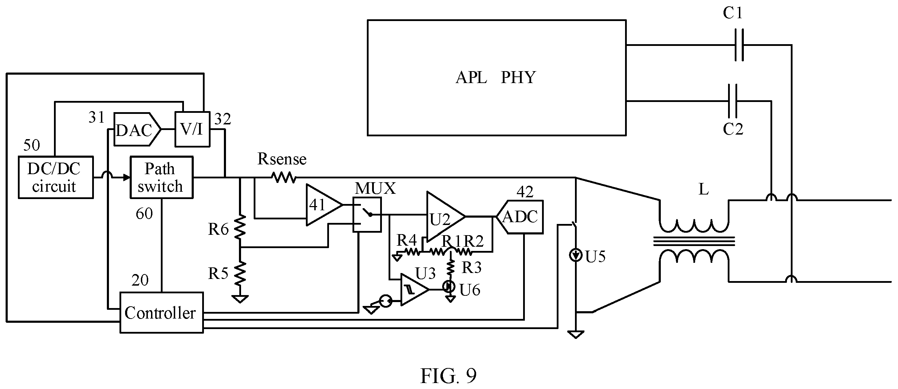

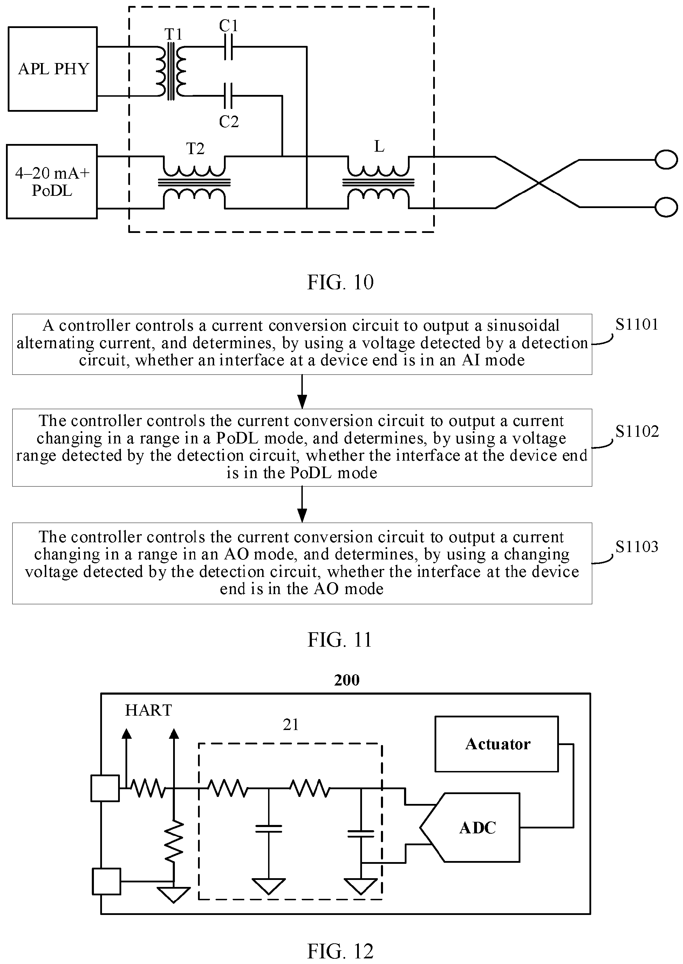

The coupling/decoupling network provided in this embodiment of this application is not limited to an architecture shown in FIG. 9, and may be further implemented by using another coupling/decoupling network. FIG. 10 is a diagram of another coupling/decoupling network according to an embodiment of this application.

In addition to the differential capacitors C1 and C2 in FIG. 9 and the filter inductor L, FIG. 10 further includes a first isolation transformer T1 and a second isolation transformer T2. The APL PHY is connected to two ends of a first winding of the first isolation transformer T1, a first end of a second winding of the first isolation transformer T1 is connected to the first differential capacitor C1, and a second end of the second winding of the first isolation transformer T1 is connected to the second differential capacitor C2. The PoDL and 4-20 mA hybrid interface circuit is connected to a first end of a first winding and a first end of a second winding of the second isolation transformer T2, a second end of the first winding and a second end of the second winding of the second isolation transformer T2 are respectively connected to a first end of a first winding and a first end of a second winding of the filter inductor, and a second end of the first winding and a second end of the second winding of the filter inductor L are respectively connected to a first end and a second end of the hybrid interface. It should be understood that the first end of the hybrid interface is a data or power interface, and the first end of the hybrid interface is generally grounded.

The hybrid interface circuit in the APL switch provided in this embodiment of this application can further implement interface self-adaptation, that is, automatically identify an interface type of an instrument device, and adjust an operating mode to adapt to operating of the instrument device. The following describes a specific implementation in detail.

The hybrid interface circuit sends a probe signal and senses a signal fed back by an interface of the instrument device to determine physical layer differences of different interface types and identify the instrument interface type of the instrument device. According to a hybrid interface module provided in this embodiment of this application, because the controller can control a value of the probe signal, the probe signal does not cause an actuator with an interface type of an instrument device being 4-20 mA AI to perform an incorrect action. For example, the actuator is a switch or a valve.

FIG. 11 is a flowchart of performing self-adaptive detection by a hybrid interface module according to an embodiment of this application.

The hybrid interface module detects an interface type of an instrument device, including a 4-20 mA AI interface, a 4-20 mA AO interface, and a PoDL interface.

S1101: A controller controls a current conversion circuit to output a sinusoidal alternating current, and determines, by using a voltage detected by a detection circuit, whether an interface of the instrument device is in an AI mode.

A hybrid interface circuit is controlled to operate in an AO mode only when the interface of the instrument device is in the AI mode.

In this embodiment of this application, detection is first performed on the AI mode to first exclude that the instrument device is in the AI mode. Otherwise, a detection signal may be incorrectly considered, during subsequent detection, by an AI device as a signal that is actually sent.

When operating in the AO mode, the APL switch needs to output a current to a cable, to provide a specified current for the instrument device instrument, so as to control a peer instrument (for example, a valve or a switch). In this mode, the controller controls the current conversion circuit to provide a current for a cable. In this case, the detection circuit is in a voltage detection mode, and detects, in real time, a voltage fed back by the instrument device in the cable.

For example, the hybrid interface circuit generates, through the current conversion circuit, a sinusoidal alternating current signal Is of ±0.5 mA with a frequency of 1.2 kHz or 2.2 kHz, and uses the signal as a probe signal. The foregoing values of the current and the frequency are merely examples. Alternatively, a sinusoidal alternating current of another value or a frequency of another value may be used. Then, a peak voltage Vsense fed back by the instrument device instrument to the hybrid interface circuit is detected through the detection circuit. Whether an interface type of the instrument device is 4-20 mA AI may be determined by calculating whether an impedance of an instrument interface connected to the instrument device is equal to approximately 250 ohms (in consideration of errors such as a detection error and a cable impedance error). An impedance calculation formula is R=Vsense/Is.

The instrument device supports a circuit with a 4-20 mA interface and is compatible with a highway addressable remote transducer (HART, Highway Addressable Remote Transducer) signal. A HART includes sine waves of 1.2 kHz and 2.2 kHz. A frequency signal with a signal amplitude of ±0.5 mA or ±500 mV is superimposed on a two-wire 4-20 mA current loop. FIG. 12 is an internal architectural diagram of an instrument device 200. To eliminate interference caused by a HART signal to 4-20 mA detection, a filter is usually disposed in the instrument device before an internal ADC performs sampling, to filter out the HART signal. The instrument device includes a filter 21 and the ADC. The ADC is configured to sample a signal that is sent by an APL switch and that is received by the instrument device. For example, the signal is a probe signal in this embodiment of this application. Because of the filter 21, after the probe signal sent by the APL switch is sampled by the ADC, the probe signal does not cause an actuator to perform an action. Therefore, the probe signal provided in this embodiment of this application may be a probe signal similar to HART, and the probe signal is filtered out by a filter in a 4-20 mA AI circuit of the instrument device. Therefore, the probe signal provided in this embodiment of this application does not cause the actuator of the instrument device to perform an incorrect action.

An internal architecture of the filter 21 is not specifically limited in this embodiment of this application. FIG. 12 is merely an example, and includes two inductors and two capacitors, or for example, may include one inductor and one capacitor.

As described above, the APL switch sends an alternating current sine signal to the instrument device to detect the interface type of the instrument device. This function requires that the DAC and the ADC in the hybrid interface module support an operating rate of 1.2 kHz or 2.2 kHz, has a high requirement on performance of the DAC and the ADC, and has high overall costs. To achieve a low-cost objective by using a low-rate DAC and ADC, the following describes another implementation: The APL switch sends a direct current signal to the instrument device to detect the interface type of the instrument device.

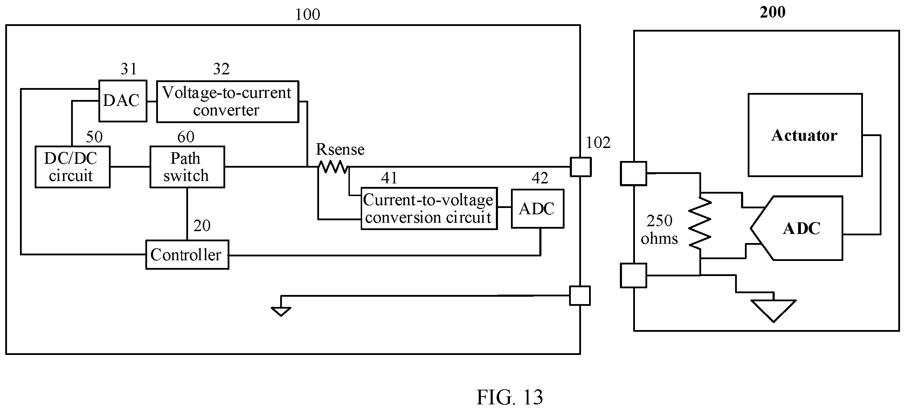

FIG. 13 is a diagram of another probe interface type according to an embodiment of this application.

A controller controls a current conversion circuit to output a direct current, where the direct current is less than a minimum value in a current range in an AI mode; and determines, by using a voltage detected by a detection circuit, whether a resistor of an instrument device meets the AI mode.

Because a valid current range of a 4-20 mA AI instrument interface is 4-20 mA, a probe signal has a current value that is of a direct current and that is set to be less than 4 mA. The current value is ignored by a 4-20 mA AI instrument, and does not cause an actuator of the instrument device to perform an incorrect action. In a possible implementation, for example, a direct current of 2 mA may be selected as a probe signal, and the controller controls the current conversion circuit to output the direct current of 2 mA to a cable, and sets the detection circuit to be in a voltage detection mode, to detect whether a voltage fed back by an instrument interface of the instrument device is approximately 0.5 V, so as to determine whether an impedance of the instrument interface of the instrument device is 250 ohms. In addition, the voltage detection mode is further used to monitor a voltage in the cable to prevent an output of an excessively high voltage to the cable from damaging the instrument interface of the instrument device.

If the AI mode is not met, S1102 continues to be performed.

S1102: The controller controls the current conversion circuit to output a current changing in a range in a PoDL mode, and determines, by using the voltage range detected by the detection circuit, whether the interface of the instrument device is in the PoDL mode.

The interface of the instrument device is in the PoDL mode, and the hybrid interface circuit is controlled to operate in the PoDL mode.

In this embodiment of this application, because a voltage in the PoDL mode is higher than a voltage in an AO mode, the PoDL mode is first detected, and then the AO mode is detected.

S1103: The controller controls the current conversion circuit to output a current changing in a range in the AO mode, and determines, by using a changing voltage detected by the detection circuit, whether the interface of the instrument device is in the AO mode. When the current changes, the voltage changes accordingly. In this case, it may be determined that the instrument device is a constant current source.

If the interface of the instrument device is in the AO mode, the hybrid interface circuit is controlled to operate in the AI mode.

It should be understood that, when an APL switch needs to operate in the AI mode, the instrument device is in the AO mode, and the APL switch needs to detect a value of a current in a cable when operating in the AI mode. In this mode, a DC/DC circuit provides an appropriate power supply, and the controller turns on a path switch to provide a power supply voltage for the cable. In this case, an interface of the instrument device instrument is an AO interface, and may convert various physical quantities (a temperature, pressure, a liquid level, a flow rate, and the like) into a current output to the cable. Therefore, the detection circuit is set to be in a current detection mode, and Rsense converts a current in the cable into a voltage through a current-to-voltage conversion circuit, to detect a current in the cable, so as to implement an AI function.

Based on the APL switch provided in the foregoing embodiment, an embodiment of this application further provides a communication method of an APL switch. The following provides detailed descriptions with reference to the accompanying drawings.

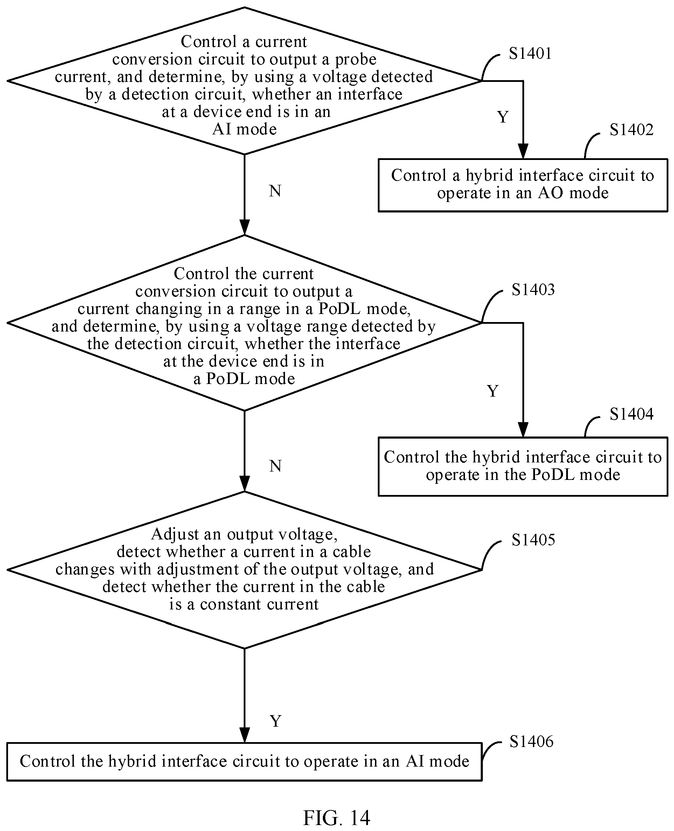

FIG. 14 is a flowchart of a communication method of an APL switch according to an embodiment of this application.

In the communication method of an APL switch provided in this embodiment of this application, the APL switch includes an APL port physical layer PHY and a hybrid interface circuit. The APL PHY is connected to a hybrid interface. The hybrid interface is configured to connect to an instrument device. The hybrid interface circuit is connected to the hybrid interface. The hybrid interface circuit includes a current conversion circuit and a detection circuit.

The method includes the following steps.

S1401: Control the current conversion circuit to output a probe current, and determine, by using a voltage detected by the detection circuit, whether an interface of the instrument device is in an AI mode, where the probe current is a sinusoidal alternating current or a direct current less than a minimum value in a current range in the AI mode. If the interface of the instrument device is in the AI mode, S1402 is performed. If the interface of the instrument device is not in the AI mode, S1403 is performed.

S1402: If the interface of the instrument device is in the AI mode, control the hybrid interface circuit to operate in an AO mode.

S1403: Control the current conversion circuit to output a current changing in a range in a PoDL mode, and determine, by using a voltage range detected by the detection circuit, whether the interface of the instrument device is in the PoDL mode. If the interface of the instrument device is in the PoDL mode, S1404 is performed. If the interface of the instrument device is not in the PoDL mode, S1405 is performed.

S1404: If the interface of the instrument device is in the PoDL mode, control the hybrid interface circuit to operate in the PoDL mode.

S1405: Adjust an output voltage, detect whether a current in a cable changes with adjustment of the output voltage, and detect whether the current in the cable is a constant current. If the current in the cable is the constant current, S1406 is performed.

S1406: If the interface of the instrument device is in the AO mode, control the hybrid interface circuit to operate in the AI mode.

For specific implementations of automatic identification interfaces in S1401, S1403, and S1405, refer to descriptions of corresponding parts in FIG. 11. Details are not described herein again.

It should be understood that, to avoid an incorrect action of the instrument device, there is a sequence relationship between the foregoing steps, that is, the APL switch first performs AI mode identification on the instrument device. If the instrument device is not in the AI mode, because a voltage in the PoDL mode is greater than that in the AO mode, the PoDL mode needs to be identified first, and if the instrument device is not in the PoDL mode, the AO mode is then identified.

The APL switch provided in this embodiment of this application may automatically identify the interface of the instrument device through the foregoing steps, and after identifying the interface of the instrument device, cooperate with the instrument device to set an operating mode of the internal hybrid interface circuit, to perform data communication or power supply with the instrument device. According to the communication method provided in this embodiment of this application, automatic identification of the AI, AO, and PoDL modes of the instrument device can be implemented, so that the instrument device in the foregoing three modes can be compatible, and APL communication is compatible with an interface of a conventional instrument device.

Because a specific manner in which the APL switch operates in the AI, AO, or PoDL mode is described in the foregoing embodiments, details are not described herein again.

The foregoing descriptions are only preferred embodiments of this application, but are not intended to limit this application in any form. Although this application is disclosed above with reference to preferred embodiments, the preferred embodiments are not intended to limit this application. A person skilled in the art can make a plurality of possible changes and modifications to the technical solutions of this application, or amend the technical solutions to be embodiments with equal effects through equivalent variations by using the method and the technical content disclosed above, without departing from the scope of the technical solutions of this application. Therefore, any simple amendments, equivalent variations, or modifications made to the foregoing embodiments based on the technical essence of this application without departing from content of technical solutions of this application still fall within the protection scope of technical solutions of this application.

## Claims

1. A network device, comprising an advanced physical layer APL port physical layer PHY and a hybrid interface circuit, wherein

the APL PHY is connected to a hybrid interface, the hybrid interface is configured to connect to an instrument device, and the hybrid interface circuit is connected to the hybrid interface; and the hybrid interface circuit is compatible with a power over data line PoDL mode, an analog input AI mode, and an analog output AO mode, wherein
in the PoDL mode, a power supply supplies power to the instrument device;
in the AI mode, the power supply supplies power to the hybrid interface; and
in the AO mode, a voltage is converted into a current corresponding to a control signal of the instrument device.

2. The network device according to claim 1, wherein an interface of the instrument device is in the AI mode, and the hybrid interface circuit is controlled to operate in the AO mode.

3. The network device according to claim 1 or 2, further comprising a controller, a current conversion circuit, and a detection circuit, wherein both the current conversion circuit and the detection circuit are connected to the controller.

4. The network device according to claim 3, wherein the controller is configured to control the current conversion circuit to output a direct current, wherein the direct current is less than a minimum value in a current range in the AI mode.

5. The network device according to claim 3 or 4, wherein the controller is further configured to: control the current conversion circuit to output a current changing in a range in the PoDL mode; determine, by using a voltage range detected by the detection circuit, whether the interface of the instrument device is in the PoDL mode; and if the interface of the instrument device is in the PoDL mode, control the hybrid interface circuit to operate in the PoDL mode.

6. The network device according to any one of claims 3 to 5, wherein the controller is further configured to: control the current conversion circuit to output a current changing in a range in the AO mode; determine, by using a changing voltage detected by the detection circuit, whether the interface of the instrument device is in the AO mode; and if the interface of the instrument device is in the AO mode, control the hybrid interface circuit to operate in the AI mode.

7. The network device according to any one of claims 3 to 6, wherein the current conversion circuit comprises a digital-to-analog converter and a voltage-to-current converter;

an input end and an output end of the digital-to-analog converter are respectively connected to the controller and the voltage-to-current converter;
the voltage-to-current converter is further configured to connect to a direct current/direct current DC/DC circuit;
the controller is configured to send a voltage control digital signal to the digital-to-analog converter;
the analog-to-digital converter is configured to convert the voltage control digital signal into a voltage control analog signal; and
the voltage-to-current converter is configured to convert, into a current based on the voltage control analog signal, a voltage output by the DC/DC circuit.

8. The network device according to any one of claims 3 to 6, wherein the detection circuit comprises a detection resistor, a current-to-voltage conversion circuit, and an analog-to-digital converter;

a first end and a second end of the detection resistor are respectively connected to an output end of the current conversion circuit and the hybrid interface;
the current-to-voltage conversion circuit is configured to: connect to the two ends of the detection resistor, and send voltages at the two ends of the detection resistor to the analog-to-digital converter; and
the analog-to-digital converter is configured to: convert, into a digital voltage, the voltage sent by the current-to-voltage conversion circuit, and send the digital voltage to the controller.

9. The network device according to claim 8, wherein the detection circuit further comprises a voltage divider and a selection switch;

   a first end and a second end of the voltage divider are respectively connected to a first end of the detection resistor and the ground;
   a first input end and a second input end of the selection switch are respectively connected to an output end of the current-to-voltage conversion circuit and an output end of the voltage divider, and an output end of the selection switch is connected to an input end of the analog-to-digital converter;
   the controller is configured to: control, in the PoDL mode and the AI mode, the output end of the selection switch to be electrically connected to the first input end; and control, in the AO mode, the output end of the selection switch to be electrically connected to the second input end; and
   the analog-to-digital converter is configured to: collect a current of the detection resistor for the controller when the output end of the selection switch is electrically connected to the first input end; and detect a voltage of the voltage divider for the controller when the output end of the selection switch is electrically connected to the second input end, wherein the controller controls, by using the voltage detected by the analog-to-digital converter detection, a current output by the current conversion circuit.

10. The network device according to claim 9, further comprising an automatic range switching circuit, wherein

    an input end and an output end of the automatic range switching circuit are respectively connected to the output end of the selection switch and the input end of the analog-to-digital converter; and
    the automatic range switching circuit comprises at least an amplifier, configured to change a gain of the amplifier by using a voltage at the output end of the selection switch.

11. The network device according to claim 10, wherein the automatic range switching circuit comprises: a hysteresis comparator, the amplifier, a first resistor, a second resistor, and a third resistor; and
    a first input end and a second input end of the hysteresis comparator are respectively connected to the output end of the selection switch and a reference voltage, a first input end of the amplifier is connected to the output end of the selection switch, a second input end of the amplifier is connected to a first end of the first resistor, a second end of the first resistor is connected to an output end of the amplifier through the second resistor, an output end of the hysteresis comparator is connected to a control end of a controllable switching transistor, a first end and a second end of the controllable switching transistor are respectively connected to a first end of the third resistor and the ground, and a second end of the third resistor is connected to the second end of the first resistor.

12. The network device according to claim 10, further comprising a path switch, wherein

    a first end and a second end of the path switch are respectively connected to an output end of a direct current/direct current DC/DC circuit and the first end of the detection resistor, and a control end of the path switch is connected to the controller; and
    the controller is further configured to: control, in the PoDL mode or the AI mode, the path switch to be turned on, and control, in the AO mode, the path switch to be turned off.

13. The network device according to any one of claims 8 to 12, further comprising a calibration switch and a reference current source, wherein

    the reference current source and the calibration switch are connected in series and then connected between a second end of the detection resistor and the ground, and a control end of the calibration switch is connected to the controller; and
    the controller is further configured to control, when the current of the detection resistor is greater than a preset current, the calibration switch to be turned on.

14. The network device according to any one of claims 1 to 13, further comprising a coupling/decoupling network, wherein

    the APL PHY is connected to the hybrid interface through a differential capacitor in the coupling/-decoupling network; and
    the hybrid interface circuit is connected to the hybrid interface through a filter inductor in the coupling/decoupling network.

15. The network device according to any one of claims 1 to 14, wherein current signal ranges in the AI mode and the AO mode are 4-20 mA.

16. The network device according to any one of claims 3 to 15, wherein the controller is further configured to: if the AI mode is not met, control the current conversion circuit to output a constant current in the range in the PoDL mode; and determine, by using a voltage detected by the detection circuit, whether the interface of the instrument device is in a PoDL probe mode.

17. A communication method of a network device, wherein the network device comprises an APL port physical layer PHY and a hybrid interface circuit, the APL PHY is connected to a hybrid interface, the hybrid interface circuit is compatible with a power over data line PoDL mode, an analog input AI mode, and an analog output AO mode, the hybrid interface is configured to connect to an instrument device, the hybrid interface circuit is connected to the hybrid interface, and the hybrid interface circuit comprises a current conversion circuit and a detection circuit; and
the method comprises:

controlling the current conversion circuit to output a probe current; determining, by using a voltage detected by the detection circuit, whether an interface of the instrument device is in the AI mode; and if the interface of the instrument device is in the AI mode, controlling the hybrid interface circuit to operate in the AO mode, wherein the probe current is a sinusoidal alternating current or a direct current less than a minimum value in a current range in the AI mode; if the interface of the instrument device is not in the AI mode, controlling the current conversion circuit to output a current changing in a range in the PoDL mode; determining, by using a voltage range detected by the detection circuit, whether the interface of the instrument device is in the PoDL mode; and if the interface of the instrument device is in the PoDL mode, controlling the hybrid interface circuit to operate in the PoDL mode; and
if the interface of the instrument device is not in the PoDL mode, controlling the current conversion circuit to output a current changing in a range in the AO mode; determining, by using a changing voltage detected by the detection circuit, whether the interface of the instrument device is in the AO mode; and if the interface of the instrument device is in the AO mode, controlling the hybrid interface circuit to operate in the AI mode.

FIG. 1

FIG. 2

FIG. 3

100

10
APL PHY

30
Current
conversion circuit

40
Detection
circuit

102

50
DC/DC
circuit

20
Controller

FIG. 4

100

31
DAC

32
Voltage-to-current
converter

50
DC/DC
circuit

60
Path
switch

Rsense

41
Current-to-voltage
conversion circuit

42
ADC

102

20
Controller

FIG. 5

FIG. 6

FIG. 7

FIG. 8

FIG. 9

EP 4 779 934 A1

FIG. 10

| A controller controls a current conversion circuit to output a sinusoidal alternating current, and determines, by using a voltage detected by a detection circuit, whether an interface at a device end is in an AI mode | S1101 |

↓

| The controller controls the current conversion circuit to output a current changing in a range in a PoDL mode, and determines, by using a voltage range detected by the detection circuit, whether the interface at the device end is in the PoDL mode | S1102 |

↓

| The controller controls the current conversion circuit to output a current changing in a range in an AO mode, and determines, by using a changing voltage detected by the detection circuit, whether the interface at the device end is in the AO mode | S1103 |

FIG. 11

FIG. 12

EP 4 779 934 A1

100

31   32
DAC   Voltage-to-current converter

50   60
DC/DC circuit   Path switch

Rsense

41   42
Current-to-voltage conversion circuit   ADC

20
Controller

102

200

Actuator

250 ohms

ADC

FIG. 13

Control a current
conversion circuit to output a probe
current, and determine, by using a voltage detected
by a detection circuit, whether an interface
at a device end is in an
AI mode
— S1401

Y

Control a hybrid interface circuit to
operate in an AO mode
— S1402

N

Control the current
conversion circuit to output a
current changing in a range in a PoDL mode,
and determine, by using a voltage range detected by
the detection circuit, whether the interface
at the device end is in
a PoDL mode
— S1403

Y

Control the hybrid interface circuit to
operate in the PoDL mode
— S1404

N

Adjust an output voltage,
detect whether a current in a cable
changes with adjustment of the output voltage, and
detect whether the current in the cable
is a constant current
— S1405

Y

Control the hybrid interface circuit to operate in an AI mode
— S1406

FIG. 14

## INTERNATIONAL SEARCH REPORT

| International application No. |
| --- |
| **PCT/CN2024/116238** |

### A. CLASSIFICATION OF SUBJECT MATTER

H04L 12/10(2006.01)i

According to International Patent Classification (IPC) or to both national classification and IPC

### B. FIELDS SEARCHED

Minimum documentation searched (classification system followed by classification symbols)

IPC:H04L12/-

Documentation searched other than minimum documentation to the extent that such documents are included in the fields searched

Electronic data base consulted during the international search (name of data base and, where practicable, search terms used)

CNABS; CNTXT; CNKI; 万方, WANFANG; 百度学术, BAIDU SCHOLAR: AO, 输出, AI, 输入, 先进物理层, APL, 以太网, 供电, PODL, PHY, 兼容, 适配 VEN; WOTXT; EPTXT; USTXT; IEEE; 3GPP: AO, AI, APL, PODL, power, control, compatible, adapt+.

### C. DOCUMENTS CONSIDERED TO BE RELEVANT

| Category* | Citation of document, with indication, where appropriate, of the relevant passages | Relevant to claim No. |
| --- | --- | --- |
| A | CN 112596470 A (FISHER-ROSEMOUNT SYSTEMS, INC.) 02 April 2021 (2021-04-02) entire document | 1-17 |
| A | CN 115480524 A (FISHER-ROSEMOUNT SYSTEMS, INC.) 16 December 2022 (2022-12-16) entire document | 1-17 |
| A | CN 115480537 A (FISHER-ROSEMOUNT SYSTEMS, INC.) 16 December 2022 (2022-12-16) entire document | 1-17 |
| A | CN 115834733 A (ZHEJIANG SUPCON TECHNOLOGY CO., LTD. et al.) 21 March 2023 (2023-03-21) entire document | 1-17 |
| A | CN 116661360 A (ZHEJIANG SUPCON TECHNOLOGY CO., LTD. et al.) 29 August 2023 (2023-08-29) entire document | 1-17 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 November 2024** | **12 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
| --- | --- |
| | **PCT/CN2024/116238** |

**C.     DOCUMENTS CONSIDERED TO BE RELEVANT**

| Category* | Citation of document, with indication, where appropriate, of the relevant passages | Relevant to claim No. |
| --- | --- | --- |
| A | WO 2022182771 A1 (PHOENIX CONTACT DEVELOPMENT AND MANUFACTURING, INC.) 01 September 2022 (2022-09-01)<br>     entire document | 1-17 |

Form PCT/ISA/210 (second sheet) (July 2022)

**INTERNATIONAL SEARCH REPORT**
**Information on patent family members**

International application No.

**PCT/CN2024/116238**

| Patent document cited in search report | | | Publication date (day/month/year) | Patent family member(s) | | | Publication date (day/month/year) |
|---|---|---|---|---|---|---|---|
| CN | 112596470 | A | 02 April 2021 | JP | 2021057892 | A | 08 April 2021 |
| | | | | GB | 2624111 | A | 08 May 2024 |
| | | | | GB | 2624111 | B | 31 July 2024 |
| | | | | US | 2021081346 | A1 | 18 March 2021 |
| | | | | US | 11734213 | B2 | 22 August 2023 |
| | | | | DE | 102020124313 | A1 | 18 March 2021 |
| | | | | GB | 202013796 | D0 | 14 October 2020 |
| | | | | GB | 2589434 | A | 02 June 2021 |
| | | | | GB | 2589434 | B | 08 May 2024 |
| CN | 115480524 | A | 16 December 2022 | US | 2022404789 | A1 | 22 December 2022 |
| | | | | GB | 202208770 | D0 | 27 July 2022 |
| | | | | GB | 2609547 | A | 08 February 2023 |
| | | | | DE | 102022114307 | A1 | 22 December 2022 |
| | | | | JP | 2022192049 | A | 28 December 2022 |
| CN | 115480537 | A | 16 December 2022 | US | 2022404798 | A1 | 22 December 2022 |
| | | | | US | 12007747 | B2 | 11 June 2024 |
| | | | | DE | 102022114301 | A1 | 22 December 2022 |
| | | | | GB | 202208759 | D0 | 27 July 2022 |
| | | | | GB | 2610030 | A | 22 February 2023 |
| | | | | JP | 2022192060 | A | 28 December 2022 |
| CN | 115834733 | A | 21 March 2023 | None | | | |
| CN | 116661360 | A | 29 August 2023 | None | | | |
| WO | 2022182771 | A1 | 01 September 2022 | US | 2023318875 | A1 | 05 October 2023 |
| | | | | EP | 4256437 | A1 | 11 October 2023 |
| | | | | WO | 2022182771 | A4 | 13 October 2022 |
| | | | | JP | 2024512230 | A | 19 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311292731